# EUROPÄISCHE PATENTSCHRIFT

(11) **EP 4 189 433 B1**
(45) Veröffentlichungstag und Bekanntmachung des Hinweises auf die Patenterteilung: **10.09.2025**
(21) Anmeldenummer: 21748831.1
(22) Anmeldetag: 22.07.2021
(51) Int. Cl.: H01Q 19/06, H01Q 15/08, G01S 13/931, H01Q 1/32

(54) **RADARSYSTEM SOWIE VERWENDUNG EINES RADARSYSTEMS**
RADAR SYSTEM AND USE OF A RADAR SYSTEM
SYSTÈME RADAR ET UTILISATION D'UN SYSTÈME RADAR

(30) Priorität: 29.07.2020 DE 102020209564
(43) Veröffentlichungstag der Anmeldung: 07.06.2023
(73) Patentinhaber: Schaeffler Technologies AG & Co. KG, 91074 Herzogenaurach (DE)
(72) Erfinder: REITMEIER, Willibald, 81737 München (DE); BURGER, Katharina, 81737 München (DE); STUHLFELNER, Friedbert, 81737 München (DE)
(74) Vertreter: Vitesco Technologies
(86) Internationale Anmeldenummer: PCT/EP2021/070486
(87) Internationale Veröffentlichungsnummer: WO 2022/023151

(56) Entgegenhaltungen:
- CN-A- 102 338 929
- CN-A- 102 790 289
- JP-A- 2006 105 866
- US-A1- 2013 271 331

## Beschreibung

Die vorliegende Erfindung betrifft ein Radarsystem nach dem Oberbegriff des Anspruchs 1. Ferner betrifft die Erfindung eine Verwendung eines derartigen Radarsystems, sowie ein Fahrzeug, das mit einem derartigen Radarsystem ausgestattet ist.

Der Einsatz von Radarsystemen gewinnt in vielen Anwendungsgebieten zunehmend an Bedeutung, sei es beispielsweise in stationären Anwendungen wie z. B. in Gewerbe und Haushalt (Bewegungsmelder, Überwachungstechnologie etc.), oder aber beispielsweise in der Automobiltechnik, etwa bei Radarsystemen mit Radarsensoren für die Abstandsbestimmung (z. B. Einparkhilfe) und/oder Radarsensoren für automatische Türöffnungssysteme (z. B. Gestikerkennung und/oder Hinderniserkennung).

Ein derartiges Radarsystem ist z. B. aus den Veröffentlichungen DE 10 2004 047 086 A1 und DE 10 2016 125 946 A1 bekannt und weist auf:
- einen Radarsensor mit einer Antenneneinrichtung zum Senden von Radarstrahlung und Empfangen von an einem Objekt reflektierter Radarstrahlung in einem Raumwinkelbereich um eine in einer Hauptrichtung verlaufende Hauptachse der Antenneneinrichtung,
- eine Steuereinrichtung, die dazu ausgebildet ist, den Radarsensor zu betreiben und die empfangene Radarstrahlung für eine Detektion von Objekten auszuwerten, und
- ein in der Hauptrichtung betrachtet vor der Antenneneinrichtung angeordnetes radaroptisches Element, um beim Durchgang der Radarstrahlung durch das radaroptische Element eine Strahlformung zu bewirken.

Das radaroptisches Element wird in diesen Veröffentlichungen als Linse bzw. Radarlinse bezeichnet und bewirkt eine Fokussierung bzw. Bündelung der Radarstrahlung beim Durchgang durch das radaroptische Element.

Ein weiteres Radarsystem dieser Art ist z. B. aus der Veröffentlichung DE 10 2013 223 783 A1 bekannt. Bei diesem Radarsystem ist das radaroptische Element von einem so genannten Radom gebildet, das vornehmlich zum Schutz des Radarsensors vor Witterungseinflüssen dient, darüber hinaus jedoch auch der Funktion als Radarlinse dienen kann.

Weiteren Stand der Technik bilden die JP 2006 105 866 A, US 2013/0271 331 A1, CN 1 02 790 289 A und CN 1 02 338 929 A.

Nachteilig ist bei den bekannten Radarsystemen, dass damit oftmals keine zuverlässige Detektion von Objekten erfolgen kann, die sich nahe am Radarsensor, jedoch seitlich versetzt zum Radarsensor bzw. dessen "Blickrichtung" (Hauptachse der Antenneneinrichtung) befinden.

Diese Problematik ist insbesondere beispielsweise dann gravierend, wenn das betreffende Radarsystem zur Verwendung an einem Fahrzeug vorgesehen ist und hierbei auch weitab von der Hauptachse des Radarsensors seitlich versetzt befindliche Objekte detektieren können soll. Erschwerend kommt bei einer derartigen Verwendung hinzu, dass der Radarsensor aus ästhetischen Gründen in der Regel nur wenig oder gar nicht von einer Außenhaut des betreffenden Fahrzeuges abstehen soll.

Es ist daher eine Aufgabe der vorliegenden Erfindung, bei einem Radarsystem der eingangs genannten Art eine verbesserte Detektion von Objekten zu ermöglichen, die sich nahe am Radarsensor, jedoch seitlich versetzt zum Radarsensor bzw. der Hauptachse der Antenneneinrichtung befinden. Insbesondere soll mit der Erfindung eine Integration eines derartigen Radarsystems in einer technischen Einrichtung (z. B. Fahrzeug) ermöglicht werden, wobei das Radarsystem z. B. mehr oder weniger bündig mit einer Oberfläche der technischen Einrichtung (z. B. Außenhaut eines Fahrzeuges) abschließen kann.

Gemäß der vorliegenden Erfindung wird diese Aufgabe dadurch gelöst, dass das radaroptische Element dazu ausgebildet ist, beim Durchgang der Radarstrahlung durch das radaroptische Element eine Strahlaufweitung in wenigstens einer zur Hauptrichtung orthogonalen Azimuthrichtung zu bewirken.

Der Begriff "Hauptrichtung" der Antenneneinrichtung bezeichnet im Sinne der Erfindung die Richtung einer vom Radarsensor bzw. dessen Antenneneinrichtung (bzw. einem Zentrum derselben) ausgehenden Linie ("Hauptachse"), um die herum ein Raumwinkelbereich existiert, in welchen hinein die gesendete Radarstrahlung abgestrahlt wird, und aus welchem heraus an einem Objekt reflektierte Radarstrahlung zurück zur Antenneneinrichtung gelangen kann.

Somit können Objekte, die auf der Hauptachse oder in dem genannten Raumwinkelbereich um diese Hauptachse liegen, nachfolgend auch als "Erfassungsbereich" des Radarsystems bezeichnet, mittels des Radarsystems detektiert werden.

In einer Ausführungsform ist die Hauptachse des Radarsensors des erfindungsgemäßen Radarsystems identisch zu einer ganz allgemein im Zusammenhang mit der Strahlungscharakteristik (Abstrahlungscharakteristik oder Empfangscharakteristik) einer Antenneneinrichtung als Hauptachse bzw. Hauptrichtung bezeichneten Richtung.

Die Abstrahlungscharakteristik der verwendeten Antenneneinrichtung, d. h. Winkelabhängigkeit der abgestrahlten Leistung (ausgedrückt als winkelabhängige relative Leistung bezogen auf ein Maximum) kann in üblicher Weise eine in der Hauptrichtung orientierte "Hauptkeule" besitzen. In Richtung der Hauptkeule ergibt sich ein globales Maximum der Leistungsabstrahlung.

Ebenso kann die Empfangscharakteristik der verwendeten Antenneneinrichtung, d. h. Winkelabhängigkeit der Empfangsempfindlichkeit (ausgedrückt als winkelabhängige relative Empfindlichkeit bezogen auf ein Maximum) eine in der Hauptrichtung orientierte Hauptkeule besitzen. In Richtung der Hauptkeule ergibt sich ein globales Maximum der Empfindlichkeit.

Es soll im Rahmen der Erfindung jedoch nicht ausgeschlossen sein, die Hauptachse des Radarsensors in einem Winkel zur Hauptrichtung einer Strahlungscharakteristik der in diesem Radarsensor eingesetzten Antenneneinrichtung orientiert vorzusehen.

Da bei der Erfindung beim Durchgang der Radarstrahlung durch das radaroptische Element eine Strahlaufweitung bewirkt wird, können vorteilhaft Objekte detektiert werden, die ohne Einsatz des radaroptischen Elements nicht detektiert werden könnten. Die Strahlaufweitung wird hierbei in wenigstens einer zur Hauptrichtung orthogonalen Azimuthrichtung bewirkt.

Wenn in einer Verwendungssituation des Radarsystems (z. B. wenn der Radarsensor mitsamt Antenneneinrichtung im Bereich einer Außenhaut eines Fahrzeuges montiert ist) beispielsweise eine in einer Horizontalrichtung orientierte Hauptachse vorgesehen ist (z. B. orthogonal zu der Außenhaut des Fahrzeuges), so kann als diejenige Azimuthrichtung, in der die Strahlaufweitung bewirkt wird, insbesondere z. B. ebenfalls eine Horizontalrichtung vorgesehen sein, um den "horizontalen Erfassungswinkelbereich" des Sensorsystems zu vergrößern.

In einer Ausführungsform der Erfindung ist das radaroptische Element dazu ausgebildet, beim Durchgang der Radarstrahlung durch das radaroptische Element eine Strahlaufweitung im Wesentlichen nur in einer Azimuthrichtung zu bewirken. In einer anderen Ausführungsform ist das radaroptische Element dazu ausgebildet, eine solche Strahlaufweitung in allen Azimuthrichtungen zu bewirken.

Der Begriff "Detektion" (von Objekten) umfasst sofern nicht explizit anders angegeben eine Detektion von Abständen und/oder Geschwindigkeiten von Objekten im Erfassungsbereich jeweils relativ zum Radarsensor. Darüber hinaus kann die Detektion auch die Detektion von Winkelabständen (in Azimuth- und/oder Elevationsrichtung) von Objekten relativ zur Hauptrichtung des Radarsensors beinhalten, z. B. unter Verwendung einer Antenneneinrichtung mit mehreren Antennen.

Die Antenneneinrichtung des erfindungsgemäßen Radarsensors kann eine oder mehrere Antennen aufweisen. In einer Ausführungsform wird eine bistatische Antennenkonfiguration eingesetzt, d. h. eine Antenneneinrichtung aufweisend separate Antennenelemente zum Senden und Empfangen. Alternativ oder zusätzlich kann auch eine monostatische Antennenkonfiguration vorgesehen sein, d. h. eine Antenneneinrichtung aufweisend wenigstens ein Antennenelement, das im Betrieb des Radarsensors sowohl zum Senden als auch Empfangen eingesetzt wird.

Bei der Erfindung kann der Radarsensor insbesondere und bevorzugt mit einer Radarsendefrequenz (gegebenenfalls Trägerfrequenz bzw. Mittenfrequenz im Falle eines frequenzmodulierten Sendesignals) senden, die größer als 1 GHz, insbesondere größer als 10 GHz ist. Andererseits kann die Sendefrequenz z. B. kleiner als 150 GHz, insbesondere kleiner als 100 GHz sein. In einer Ausführungsform beträgt die Frequenz 24 GHz. In einer anderen Ausführungsform liegt die Frequenz im Bereich 76 GHz - 77 GHz oder im Bereich 77 GHz - 81 GHz.

Der im erfindungsgemäßen Radarsystem verwendete Radarsensor kann z. B. als eine ein so genannter CW ("continuous wave")-Radarsensor ausgebildet sein. Alternativ kann ein so genannter FMCW ("frequency modulated continuous wave")-Radarsensor vorgesehen sein.

Im Hinblick auf eine ausreichende Transparenz für die verwendete Radarstrahlung kann das radaroptische Element z. B. aus einem Kunststoffmaterial (z. B. Epoxidmaterial) gebildet sein. Das Material des radaroptischen Elements, z. B. Kunststoffmaterial, kann z. B. einen Brechungsindex besitzen, der für die verwendete Radarstrahlung im Bereich von 1,2 bis 1,6 liegt.

In einer Ausführungsform ist vorgesehen, dass das radaroptische Element über das Volumen desselben betrachtet uneinheitliche radaroptische Eigenschaften (z. B. Brechungsindex und/oder Transmission) aufweist und/oder entsprechende Teilbereiche aufweist wie z. B. eine (z. B. teilweise) Beschichtung an dessen Innenseite und/oder Außenseite aufweist (oder z. B. einen carbonisierten Teilbereich). Damit kann z. B. eine gezielte Strahlführung realisiert bzw. optimiert werden.

In einer Ausführungsform besitzt ein solcher Teilbereich bzw. eine solche Beschichtung des radaroptischen Elements eine im Vergleich zum übrigen Material des radaroptischen Elements erhöhte Absorption (z. B. einen um mindestens einen Faktor 10 höheren Absorptionskoeffizienten) für die verwendete Radarstrahlung. Damit kann z. B. vorteilhaft ein Teil der Radarstrahlung absorbiert (ausgeblendet) werden. Diese Ausführungsform kann z. B. in einer Verwendung des Radarsystems an einer technischen Einrichtung wie z. B. einem Fahrzeug sehr vorteilhaft sein, um für wenigstens ein "Objekt", das eine bezüglich des Radarsensors stationär angeordnete Komponente dieser technischen Einrichtung bzw. dieses Fahrzeuges (z. B. ein Außenspiegel des Fahrzeuges) darstellt, die Detektion dieses Objekts zu unterdrücken.

In einer solchen Verwendung kann der ein bestimmtes Objekt ausblendende Teilbereich (bzw. Beschichtung) mit der erhöhten Absorption z. B. nur punktuell ausgebildet sein, z. B. lediglich maximal 10% oder maximal 5% desjenigen Raumwinkelbereichs beanspruchen, über welchen sich das radaroptische Element von der Antenneneinrichtung aus betrachtet erstreckt.

Außerdem ist es in einer solchen Verwendung oftmals vorteilhaft, wenn der ein bestimmtes Objekt ausblendende Teilbereich (bzw. Beschichtung) winkelmäßig in dem vorerwähnten Raumwinkelbereich relativ weitab von der Hauptrichtung vorgesehen ist, z. B. in einem Bereich von Elevationswinkeln von maximal 30°, insbesondere maximal 20°.

Erfindungsgemäß ist ferner vorgesehen, dass das radaroptische Element in einer von der Hauptrichtung und der Azimuthrichtung aufgespannten Schnittebene betrachtet beiderseits der Hauptachse befindliche Schnittflächenabschnitte aufweist, und dass wenigstens einer der beiden Schnittflächenabschnitte mehrere von der Antenneneinrichtung (bzw. einem Zentrum derselben) aus betrachtet in verschiedenen Elevationsrichtungen und mit verschiedenen Abständen zur Antenneneinrichtung gestaffelt aneinandergereihte (und z. B. einstückig miteinander verbundene) Segmente aufweist. Die Segmente können jeweils aufweisen:
- einen ersten Segmentrand auf einer der Antenneneinrichtung zugewandten Innenseite des radaroptischen Elements, der im Wesentlichen orthogonal zu einer von der Antenneneinrichtung zum ersten Segmentrand verlaufenden Verbindungslinie verläuft,
- einen zweiten Segmentrand auf einer der Antenneneinrichtung abgewandten Außenseite des radaroptischen Elements, der im Wesentlichen orthogonal zu einer von der Antenneneinrichtung zum zweiten Segmentrand verlaufenden Verbindungslinie verläuft,
- einen dritten Segmentrand auf der Innenseite des radaroptischen Elements der im Wesentlichen parallel zu einer von der Antenneneinrichtung zum dritten Segmentrand verlaufenden Verbindungslinie verläuft, und
- einen vierten Segmentrand auf der Außenseite des radaroptischen Elements, der im Wesentlichen parallel zu einer von der Antenneneinrichtung zum vierten Segmentrand verlaufenden Verbindungslinie verläuft.

Bei jedem der Segmente bilden dessen genannte vier Segmentränder somit in erster Näherung ein Rechteck, bzw. in "besserer" Näherung ein Trapez (da zumindest die dritten und vierten Segmentränder jedes Segments nicht exakt parallel zueinander verlaufen).

Durch die Anordnung der gestaffelt aneinandergereihten Segmente kann in einfacher und besonders vorteilhafter Weise eine dem konkreten Anwendungsfall angepasste "maßgeschneiderte" Strahlaufweitungscharakteristik erzielt werden. Eine derartige Anpassung kann sich sowohl auf die Anzahl der Segmente und deren Staffelung, als auch die konkrete Geometrie (Verläufe) der vier Segmentränder jedes Segments beziehen. Im konkreten Anwendungsfall kann die Anpassung durch Einsatz einer so genannten "Ray Tracing"-Simulation optimiert werden, bei welcher neben der Geometrie auch die relevanten Materialparameter wie z. B. Brechungsindex und Grenzflächeneffekte wie z. B. Brechung, Transmission, Reflexion berücksichtigt werden können.

In vielen Anwendungsfällen ist z. B. eine Strahlaufweitung interessant, die insbesondere (bzw. ausschließlich) im Randbereich des betreffenden Erfassungswinkelbereichs wirkt, also kaum oder nicht in einem die Hauptrichtung beinhaltenden zentralen Bereich. In einer Ausführungsform ist daher vorgesehen, dass das radaroptische Element bzw. die genannten Segmente derart ausgebildet sind, dass damit eine Stahlaufweitung im Wesentlichen nur in einem Randbereich des betreffenden Erfassungswinkelbereichs (bei horizontaler Strahlaufweitung z. B. horizontaler Winkelbereich) bewirkt wird. Dieser Randbereich kann bei einem in der betreffenden Azimuthrichtung betrachteten Elevationswinkel von z. B. maximal 30°, insbesondere maximal 20°, insbesondere maximal 10° beginnen, wobei der "Elevationswinkel" hierbei den Winkel zwischen einerseits der betreffenden Azimuthrichtung (Elevationswinkel = 0°) und andererseits der betreffenden Strahlrichtung bezeichnet.

In einer Weiterbildung ist vorgesehen, dass der wenigstens eine der beiden Schnittflächenabschnitte zwei gestaffelt aneinandergereihte Segmente aufweist. Alternativ können auch z. B. drei (oder vier) gestaffelt aneinandergereihte Segmente vorgesehen sein.

Was die Geometrie (Verläufe) der vier Segmentränder jedes Segments anbelangt, so kann z. B. vorgesehen sein, dass bei wenigstens einem der Segmente (insbesondere z. B. bei allen Segmenten des betreffenden Schnittflächenabschnitts) ein im Wesentlichen geradliniger Verlauf des ersten Segmentrandes, ein im Wesentlichen geradliniger Verlauf des zweiten Segmentrandes, ein im Wesentlichen geradliniger Verlauf des dritten Segmentrandes, und/oder ein im Wesentlichen geradliniger Verlauf des vierten Segmentrandes vorgesehen ist. Beispielsweise kann hierzu vorgesehen sein, dass die lokale Orientierung des Verlaufs eines betreffenden Segmentrandes um maximal 5°, insbesondere maximal 2,5° variiert (0° entspricht einem ideal geradlinigem Verlauf).

Der erste Segmentrand jedes Segments definiert eine "Eintrittsfläche" für die von der Antenneneinrichtung gesendete Radarstrahlung, an der diese Strahlung in das betreffende Segment eindringt.

In einer Weiterbildung ist vorgesehen, dass der erste (z. B. geradlinig verlaufende) Segmentrand zumindest an einer Stelle eine Normalenrichtung besitzt, die bezüglich einer von der Antenneneinrichtung zu dieser Stelle verlaufenden Verbindungslinie mit einem Neigungswinkel im Bereich von 1 bis 20° derart geneigt verläuft, dass von der Antenneneinrichtung gesendete und an dieser Stelle auftreffende Radarstrahlung in Richtung von der Hauptrichtung weg gebrochen wird. Dies trägt vorteilhaft zu der mit dem radaroptischen Element bezweckten Strahlaufweitung bei. Alternativ oder zusätzlich kann jedoch auch vorgesehen sein, dass der erste Segmentrand zumindest an einer Stelle eine Normalenrichtung besitzt, die bezüglich einer von der Antenneneinrichtung zu dieser Stelle verlaufenden Verbindungslinie mit einem Neigungswinkel im Bereich von 1 bis 20° derart geneigt verläuft, dass von der Antenneneinrichtung gesendete und an dieser Stelle auftreffende Radarstrahlung in Richtung zunächst zur Hauptrichtung hin gebrochen wird, um sodann den vierten Segmentrand zu erreichen und dort in Richtung von der Hauptrichtung weg totalreflektiert zu werden.

Der zweite Segmentrand jedes Segments definiert eine "Austrittsfläche" für die von der Antenneneinrichtung gesendete und bereits im betreffenden Segment sich ausbreitende Radarstrahlung, an der diese Strahlung das Segment wieder verlässt.

Für den zweiten Segmentrand (z. B. geradlinig verlaufend) kann vorgesehen sein, dass dieser zumindest an einer Stelle eine Normalenrichtung besitzt, mittels welcher bewirkt wird, dass eine von der Antenneneinrichtung gesendete und an einer Stelle des ersten Segmentrandes in das Segment eingedrungene Radarstrahlung durch das Segmentmaterial hindurch (sei es mit oder ohne Totalreflexion am vierten Segmentrand) an die genannte Stelle des zweiten Segmentrandes gelangt und dort (beim Wiederaustritt aus dem Segment) in Richtung von der Hauptrichtung weg gebrochen wird. Auch dies trägt vorteilhaft zu der mit dem radaroptischen Element bezweckten Strahlaufweitung bei. Gemäß einer diesbezüglichen Ausführungsform kann z. B. vorgesehen sein, dass die Verläufe der ersten und zweiten Segmentränder in einem Winkel von mindestens 10° zueinander geneigt (nicht-parallel) orientiert sind.

Der dritte Segmentrand (z. B. geradlinig verlaufend) eines Segments kann einen Abschnitt besitzen, der an einem Abschnitt des vierten Segmentrandes eines in der gestaffelten Segmentanordnung benachbarten Segments angrenzt, und kann einen weiteren Abschnitt besitzen, der einen freiliegenden Abschnitt der Innenseite des radaroptischen Elements darstellt.

Der vierte Segmentrand eines Segments kann einen Abschnitt besitzen, der an einem Abschnitt des dritten Segmentrandes eines in der gestaffelten Segmentanordnung benachbarten Segments angrenzt, und kann einen weiteren Abschnitt besitzen, der einen freiliegenden Abschnitt der Außenseite des radaroptischen Elements darstellt.

In einer Weiterbildung ist vorgesehen, dass der vierte Segmentrand (z. B. geradlinig verlaufend) zumindest an einer Stelle (von dessen einen Außenseitenabschnitt des radaroptischen Elements darstellenden Abschnitt) eine Verlaufsrichtung besitzt, durch welche von der Antenneneinrichtung gesendete, über den ersten Segmentrand in das Segment eingetretene, und diese Stelle erreichende Radarstrahlung in Richtung von der Hauptrichtung weg totalreflektiert wird. Dies trägt vorteilhaft zu der mit dem radaroptischen Element bezweckten Strahlaufweitung bei.

In einer Weiterbildung ist vorgesehen, dass die beiderseits der Hauptachse befindlichen Schnittflächenabschnitte des radaroptischen Elements bezüglich der Hauptrichtung symmetrisch zueinander sind. Damit kann eine in der betreffenden Azimuthrichtung betrachtet bezüglich der Hauptrichtung symmetrische Strahlaufweitung erzielt werden. Abweichend davon kommt auch eine z. B. nur näherungsweise bezüglich der Hauptrichtung symmetrische Formgestaltung der Segmentbereiche bzw. des gesamten radaroptischen Elements in Betracht. Damit können z. B. in den beiden Orientierungsrichtungen der Azimuthrichtung betrachtet vorteilhaft verschiedene Strahlaufweitungen realisiert werden, z. B. in Verwendungssituation in einer horizontalen Azimuthrichtung betrachtet eine stärkere Aufweitung auf einer "linken" (oder "rechten") Seite des Erfassungsbereiches als auf einer "rechten" (oder "linken") Seite des Erfassungsbereiches.

In einer Ausführungsform des Radarsystems ist vorgesehen, dass das radaroptische Element einstückig ausgebildet ist. Damit ergibt sich vorteilhaft eine besonders einfache Herstellbarkeit und einfache Montage des radaroptischen Elements.

In einer Ausführungsform ist vorgesehen, dass das radaroptische Element (bzw. zumindest dessen Segmentbereiche) rotationssymmetrisch bezüglich der Hauptachse ausgebildet ist. Damit kann z. B. eine in allen Azimuthrichtungen wirkende Strahlaufweitung realisiert werden. Abweichend davon kommt auch eine z. B. nur näherungsweise rotationssymmetrische Formgestaltung der den Segmenten entsprechenden Bereiche bzw. des gesamten radaroptischen Elements in Betracht, wie etwa mit in Draufsicht betrachtet nicht kreisförmiger sondern ovaler Kontur. Damit können in verschiedenen Azimuthrichtungen betrachtet vorteilhaft verschiedene Strahlaufweitungen realisiert werden, z. B. in Verwendungssituation eine in einer horizontalen Azimuthrichtung stärkere Aufweitung als in einer vertikaler Azimuthrichtung.

In einer Ausführungsform ist vorgesehen, dass das radaroptische Element scheibenartig ausgebildet ist, wobei eine in Richtung der Hauptrichtung gemessene Ausdehnung des radaroptischen Elements im Bereich des 0,05-fachen bis 0,25-fachen einer maximalen in Richtung orthogonal zur Hauptrichtung gemessenen Ausdehnung des radaroptischen Elements liegt.

Mit einer derartigen relativ "flachen" Formgestaltung des radaroptischen Elements kann besonders vorteilhaft ein in einer technischen Einrichtung (z. B. Fahrzeug) zu integrierendes bzw. integriertes Radarsystem realisiert werden, das mehr oder weniger bündig mit einer Oberfläche der technischen Einrichtung (z. B. Außenhaut eines Fahrzeuges) abschließt.

Wie bereits erwähnt kann das radaroptische Element (wenigstens) einen Teilbereich (und/oder eine z. B. teilweise Beschichtung an Innenseite und/oder Außenseite) aufweisen, dessen radaroptische Eigenschaften (z. B. Brechungsindex und/oder Transmission und/oder Absorption und/oder Reflexion) von denjenigen der übrigen Bereiche des Elements abweichen. In einer diesbezüglichen Ausführungsform ist vorgesehen, dass das radaroptische Element an seiner Außenseite bzw. die Außenseite bildend einen solchen Teilbereich aufweist, mittels welchem vorteilhaft eine im Wesentlichen flache Außenseite des radaroptischen Elements bewerkstelligt wird. Damit kann z. B. vorteilhaft ein nach außen hin "glatter" Abschluss des Radarsensors erzielt werden. Insbesondere kann dieser Teilbereich z. B. hinsichtlich des Brechungsindex (für die verwendete Radarstrahlung) von den übrigen Elementbereichen (z. B. den Segmentbereichen) abweichen und z. B. aus einem speziellen Kunststoff mit z. B. einem vergleichsweise niedrigen Brechungsindex (ähnlich wie Luft, z. B. kleiner als 1,1) gebildet sein. Gegebenenfalls kann ein Teil dieses (der Verflachung der Außenseite dienenden) Teilbereichs außerdem einen wie oben bereits erwähnten Teilbereich mit erhöhter Absorption (z. B. mit einen um mindestens einen Faktor 10 höherem Absorptionskoeffizienten) für die oben erwähnte "Objektausblendung" darstellen.

Gemäß einer besonders vorteilhaften Verwendung des Radarsystems ist dieses für eine Detektion von Objekten in einer Umgebung eines Fahrzeuges an einer Außenhaut des Fahrzeuges angeordnet, wobei der Radarsensor mitsamt Antenneneinrichtung vertieft unterhalb der Außenhaut angeordnet ist, wohingegen das radaroptische Element im Bereich der Außenhaut angeordnet ist.

Gemäß eines weiteren Aspekts der Erfindung wird ein Fahrzeug vorgeschlagen, das mit einem Radarsystem der hier beschriebenen Art ausgestattet ist.

Bei einer derartigen Verwendung bzw. einem derartigen Fahrzeug kann insbesondere vorgesehen sein, dass das radaroptische Element im Bereich einer Außenhaut des Fahrzeuges angeordnet ist, und zwar insbesondere z. B. im Wesentlichen bündig zu dieser Außenhaut, wohingegen der Radarsensor mitsamt Antenneneinrichtung in diesem Fall auch vertieft unterhalb der Außenhaut angeordnet sein kann.

Die Hauptachse des Radarsensors kann z. B. in einer Horizontalrichtung und/oder orthogonal zur Außenhaut (im Bereich der Anordnungsstelle des Radarsensors) orientiert sein.

In einer Ausführungsform ist das Radarsystem im Bereich eines Außenhautabschnitts einer Außenhaut des Fahrzeuges angeordnet, der zu einem seitlichen Umgebungsbereich (vorne, hinten, links, rechts) des Fahrzeuges hin orientiert ist.

Im Falle eines Straßenkraftfahrzeuges wie eines PKW oder LKW kann dieses Radarsystem z. B. im Bereich einer Seitenwand des Fahrzeuges (z. B. an einer Tür, einem Türgriff, oder einem Außenspiegel) angeordnet sein.

In einer vorteilhaften Ausgestaltung des Fahrzeuges bzw. der Verwendung ist vorgesehen, dass das Fahrzeug mit einer oder mehreren automatisch bzw. motorisch betreibbaren Fahrzeugkomponenten wie insbesondere z. B. verlagerbaren Verschlusselementen (z. B. Türen und/oder Klappen) ausgestattet ist und das Radarsystem zur Erfassung von etwaigen Hindernissen während der motorischen Verlagerung der betreffenden Fahrzeugkomponente(n) eingesetzt wird.

Dabei kann beispielsweise wenigstens ein Radarsystem pro Fahrzeugkomponente (z. B. Tür) eingesetzt werden, um durch eine jeweilige Objektdetektion automatische Verlagerungsvorgänge wie z. B. Türöffnungsvorgänge (und/oder Türschließvorgänge) sicher zu initiieren bzw. bei einem durch die Objektdetektion erkannten Hindernis die Türöffnung (bzw. Türschließung) zu inaktivieren oder zu stoppen, oder z. B. ein Verstellen der Tür (oder einer anderen betreffenden Fahrzeugkomponente) nur bis kurz vor das Hindernis zu realisieren.

Alternativ oder zusätzlich zum Einsatz des Radarsystems zur Erfassung von etwaigen Hindernissen während einer automatischen Verlagerung einer Fahrzeugkomponente wie z. B. bei einer Öffnung und/oder Schließung einer Tür oder Klappe kann auch vorgesehen sein, das Radarsystem für eine Gestikerkennung einzusetzen, beispielsweise um Gesten eines Benutzers zu erkennen, mit denen der Benutzer den Betrieb einer automatisch verlagerbaren Fahrzeugkomponente wie z. B. Tür oder Klappe (und/oder eine andere Funktionalität des Fahrzeuges wie z. B. Türverriegelung und/oder -entriegelung etc.) steuern kann.

Des Weiteren kann das Radarsystem vorteilhaft auch als eine Sensorikkomponente für eine Funktionalität des Fahrzeuges im Zusammenhang mit dem Einparken des Fahrzeuges (z. B. "Einparkhilfe", oder z. B. System zum teil- oder vollautomatischen Einparken) eingesetzt werden.

Schließlich kann das Radarsystem vorteilhaft z. B. auch für eine Innenraumüberwachung eines Fahrzeuges eingesetzt werden (z. B. angeordnet an einem Armaturenbrett oder einem Fahrzeugdachhimmel).

In allen vorstehend genannten Verwendungen ergeben sich besondere Vorteile aus der mittels der Erfindung erzielbaren Vergrößerung eines Erfassungs(winkel)bereiches des Radarsystems.

In einer Weiterbildung der Erfindung umfasst das Radarsystem mehrere Radarsensoren der hier beschriebenen Art, sowie eine gemeinsame (zentrale) Steuereinrichtung, die zur Steuerung des Betriebs und zur Auswertung der empfangenen Radarsignale für mehrere bzw. alle diese Radarsensoren eingesetzt wird. In einer Ausführungsform sind die mehrere Radarsensoren an verschiedenen Stellen eines Fahrzeuges angeordnet (vgl. z. B. die weiter oben bereits erläuterten Anwendungsbeispiele), wobei die Radarsensoren sowie die Steuereinrichtung z. B. über ein digitales Kommunikationsbussytem vernetzt sein können. Vorteilhaft kann hierbei z. B. eine noch genauere Detektion von Objekten realisiert werden (z. B. unter Verwendung von Korrelationsanalysen und/oder Einsatz einer Triangulationsmethode oder dergleichen).

Die Steuereinrichtung des erfindungsgemäßen Radarsystems kann z. B. als programmgesteuerte elektronische Steuereinrichtung (z. B. Mikrocontroller etc.) implementiert sein und z. B. mittels entsprechender Steuersignale den Betrieb der einzelnen Radarsensoren des Radarsystems steuern. Die Steuerung des Radarsensors kann insbesondere ein Aktivieren und Deaktivieren eines Sendebetriebs zum Senden eines Radarsignals ("Radarsendesignal" in Form der gesendeten Radarstrahlung) und gegebenenfalls z. B. ein Einstellen der Sendefrequenz beinhalten.

Die Steuereinrichtung ist dazu ausgebildet, die von der Antenneneinrichtung des Radarsensors empfangene Radarstrahlung ("Radarempfangssignal") auszuwerten und damit die Detektion von Objekten im Erfassungsbereich des Systems zu realisieren.

In einer Ausführungsform der Erfindung ist der Radarsensor dazu ausgebildet, eine Objekterfassung unter Nutzung des Dopplereffekts durchzuführen, um eine Objektbewegungserfassung zu realisieren ("Doppler-Radar"). Damit kann der Radarsensor vorteilhaft als Bewegungssensor fungieren, was jedoch nicht ausschließt, dass der Radarsensor (zusätzlich) für eine Erfassung von unbewegten Objekten geeignet ausgebildet ist und/oder betrieben wird.

Die Nutzung des Dopplereffekts erfolgt bevorzugt in an sich bekannter Weise dadurch, dass beim Senden der Radarstrahlung mit einer bestimmten Radarsignal-Sendefrequenz, nachfolgend auch als "TX-Signal" bezeichnet, ein z. B. dazu kohärentes Signal lokal (im betreffenden Radarsensor) vorgehalten wird, nachfolgend auch als lokales Signal oder "LO-Signal" bezeichnet, welches z. B. identisch dem TX-Signal ist oder z. B. eine in einem vorbestimmten Ausmaß frequenzverschobene Version des TX-Signals darstellt, und dieses LO-Signal mit dem empfangenen Radarsignal (entsprechend der empfangenen Radarstrahlung), nachfolgend auch als "RX-Signal" bezeichnet, gemischt wird. Infolge der Signalmischung der LO- und RX-Signale entsteht ein so genanntes Zwischenfrequenzsignal, nachfolgend auch als "IF-Signal" bezeichnet, dessen zeitlicher Verlauf und dessen spektrale Zusammensetzung jeweils charakteristisch für ein Bewegungsgeschwindigkeitsspektrum der vom Radarsensor erfassten Objekte sind. Für eine Auswertung des TX-Signals kann daher insbesondere z. B. der zeitliche Verlauf und/oder das Spektrum des IF-Signals ausgewertet werden.

Falls das LO-Signal z. B. identisch zum TX-Signal vorgesehen wird, so führt die zur Geschwindigkeit eines Objekts (relativ zum Radarsensor) proportionale Dopplerverschiebung der Radarsignal-Empfangsfrequenz zu einem "Peak" im Radarsignal-Empfangsspektrum (RX-Signal), und zwar bei einer Peak-Frequenz, deren Abweichung von der Frequenz des gesendeten Radarsignals (TX-Signal bzw. LO-Signal) proportional zur Geschwindigkeit des Objekts ist.

Wenn ein Objekt sich vom Radarsensor entfernt, so wird die Frequenz nach unten dopplerverschoben, wohingegen im Falle einer Annäherung des Objekts an den Radarsensor die Frequenz nach oben verschoben wird. Durch eine geeignete Auswertung des IF-Signals, insbesondere durch eine Ermittlung einer frequenzabhängigen Intensität des IF-Signals können in an sich bekannter Weise somit eine oder mehrere Bewegungsgeschwindigkeiten detektiert werden.

Falls das LO-Signal als eine frequenzverschobene Version des TX-Signals vorgesehen wird, so gilt im Prinzip das gleiche. Mit dieser Maßnahme wird lediglich der bei der Objekterfassung vorgesehene Frequenzbereich des IF-Signals, der auch als Basisband bezeichnet wird, entsprechend frequenzverschoben.

In einer Ausführungsform ist der Radarsensor zum Betrieb als CW-Radarsensor, insbesondere FMCW-Radarsensor ausgebildet. Bei einem CW-Radarsensor kann eine Nutzung des Dopplereffekts vorgesehen sein, beispielsweise wie vorstehend beschrieben, und auch bei einem FMCW-Radarsensor kann eine Nutzung des Dopplereffekts vorgesehen sein.

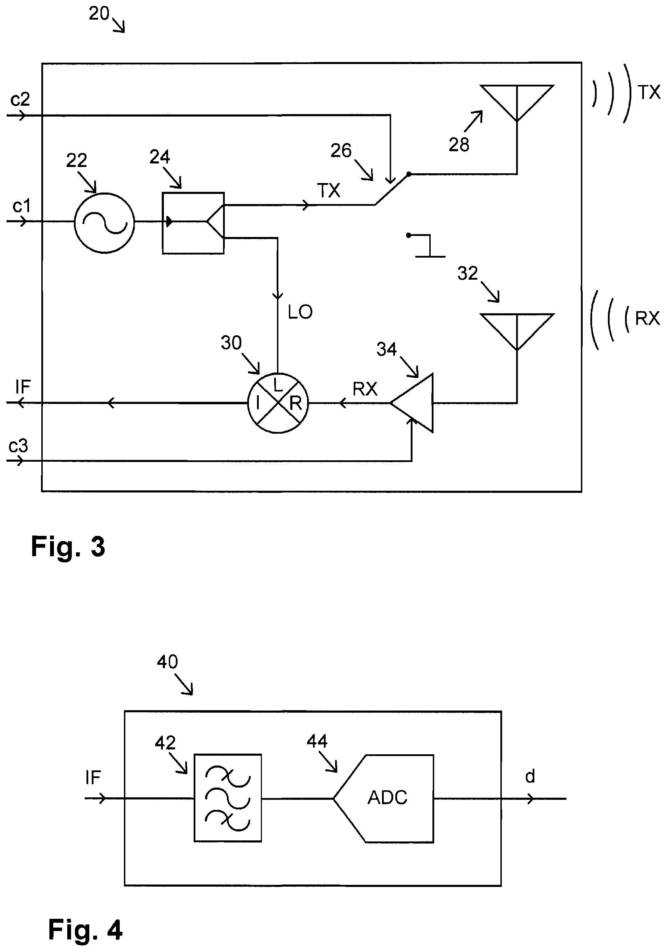

Der FMCW-Radarsensor ist eine mögliche bzw. speziellere Ausführung eines CW-Radarsensors. Beim FMCW-Radarsensor ist vorgesehen, dass ein kontinuierlich gesendetes TX-Signal nicht mit einer fest vorgegebenen Radarsignal-Sendefrequenz gesendet wird, sondern ein frequenzmoduliertes TX-Signal gesendet wird. Beispielsweise kann hierfür eine sägezahnförmige oder eine sinusförmige Frequenzmodulation vorgesehen sein. Der Nutzen der Frequenzmodulation des TX-Signals besteht darin, dass zu jedem Zeitpunkt dem TX-Signal gewissermaßen ein Zeitstempel verliehen wird, so dass durch eine entsprechende Auswertung des empfangenen Radarsignals (RX-Signal) die Laufzeit des Radarsignals (vom Radarsensor zum Objekt und wieder zurück) und daraus der Abstand zwischen Radarsensor und Objekt bestimmt werden kann. Dies kann z. B. unter Einsatz einer Frequenzmischung und Zwischenfrequenzerzeugung erfolgen (vgl. Ausführungsbeispiel gemäß Fig. 3). Mit einem FMCW-Radarsensor kann somit vorteilhaft sowohl der Abstand als auch die Geschwindigkeit von Objekten erfasst werden.

Ein Vorteil eines FMCW-Radars ist wie beschrieben die Möglichkeit zur direkten Entfernungsbestimmung. Die Geschwindigkeit eines Objekts kann alternativ z. B. über mindestens zwei sukzessive Messungen ermittelt werden, oder alternativ z. B. über eine dreieckförmige Frequenzmodulation des TX-Signals.

In einer Weiterbildung der Erfindung ist vorgesehen, dass das radaroptische Element oder zumindest ein Teilbereich davon als ein Reflektor für die vom Radarsensor gesendete Radarstrahlung genutzt wird, so dass anhand einer Auswertung der damit zum Radarsensor zurückreflektierten Strahlung z. B. vorteilhaft eine Eigendiagnose der Funktionsfähigkeit des Radarsystems realisiert sein kann.

Die Erfindung wird nachfolgend anhand von Ausführungsbeispielen mit Bezug auf die beigefügten Zeichnungen weiter beschrieben. Es stellen dar:
- Fig. 1: ein Blockdiagramm eines Radarsystems gemäß eines Ausführungsbeispiels (Monostatische Antennenkonfiguration),
- Fig. 2: ein Blockdiagramm eines Radarsystems gemäß eines weiteren Ausführungsbeispiels (Bistatische Antennenkonfiguration),
- Fig. 3: einen im Radarsystem von Fig. 2 verwendeten Radarsensor gemäß eines Ausführungsbeispiels,
- Fig. 4: eine im Radarsystem von Fig. 2 verwendete Signalverarbeitungseinrichtung gemäß eines Ausführungsbeispiels,
- Fig. 5: eine Axialschnittansicht eines radaroptischen Elements gemäß eines Ausführungsbeispiels,
- Fig. 6: eine teilweise geschnittene perspektivische Ansicht eines radaroptischen Elements gemäß eines Ausführungsbeispiels, und
- Fig. 7: ein mit einem Radarsystem ausgestattetes Fahrzeug gemäß eines Ausführungsbeispiels.

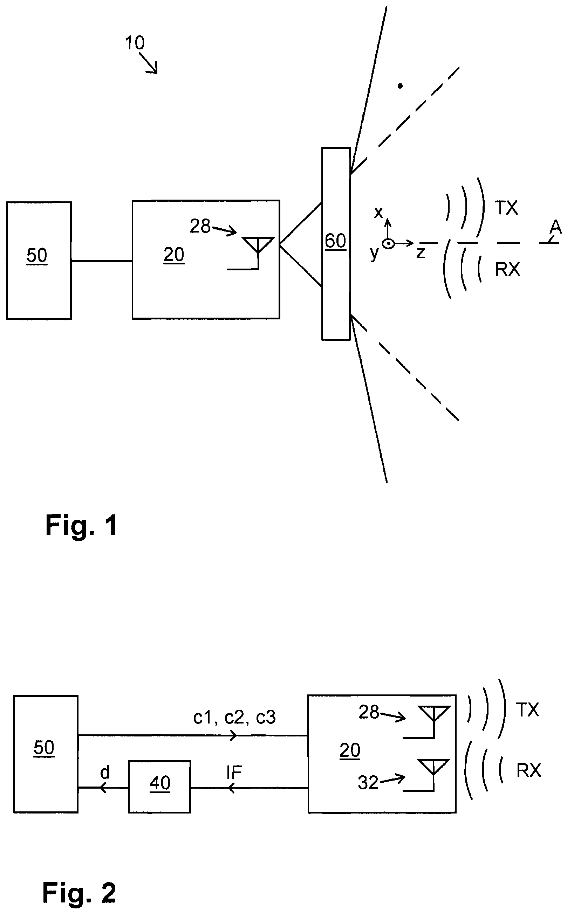

Fig. 1 zeigt ein Radarsystem 10, aufweisend einen Radarsensor 20 mit einer Antenneneinrichtung 28 für eine Objekterfassung durch Senden von Radarstrahlung TX und Empfangen von an einem Objekt (nicht dargestellt) reflektierter Radarstrahlung RX.

Das Radarsystem 10 weist ferner eine Steuereinrichtung 50 auf, die dazu ausgebildet ist, den Radarsensor 20 zu betreiben und die empfangene Radarstrahlung RX für eine Detektion von Objekten auszuwerten

Eine Besonderheit des Radarsystems 10 besteht darin, dass dieses ferner ein in einer Hauptrichtung z betrachtet vor der Antenneneinrichtung 28 angeordnetes radaroptisches Element 60 aufweist, mittels welchem beim Durchgang der Radarsstrahlung TX, RX durch das radaroptische Element 60 eine Strahlaufweitung bewirkt wird.

Die Strahlaufweitung wird hierbei in wenigstens einer zur Hauptrichtung z orthogonalen Azimuthrichtung bewirkt. Diese Azimuthrichtung ist in Fig. 1 mit x bezeichnet. Eine weitere Azimuthrichtung, orthogonal zur Azimuthrichtung x, ist in Fig. 1 mit y bezeichnet.

Das Senden und Empfangen von Radarstrahlung mittels der Antenneneinrichtung 28 erfolgt in einem Raumwinkelbereich um eine in der Hauptrichtung z verlaufende Hauptachse A der Antenneneinrichtung 28.

In Fig. 1 mit gestrichelter Linie symbolisiert ist der Raumwinkelbereich, in den hinein Radarstrahlung gesendet und aus dem heraus Radarstrahlung empfangen würde, wenn das radaroptische Element 60 nicht vorhanden wäre.

In Fig. 1 mit durchgezogener Linie symbolisiert ist der demgegenüber aufgrund der strahlaufweitenden Wirkung des radaroptischen Elements 60 (zumindest in der Azimuthrichtung x betrachtet) vergrößerte Raumwinkelbereich, in den im dargestellten Beispiel Radarstrahlung gesendet und aus dem heraus Radarstrahlung empfangen wird.

Mit dem radaroptischen Element 60 wird somit der Erfassungsbereich des Radarsystems 10 vergrößert, innerhalb dem Radarstrahlung reflektierende Objekte erfasst werden können. Daher ergibt sich vorteilhaft eine verbesserte Detektierbarkeit für Objekte, die sich z. B. relativ nahe am Radarsensor 20 und relativ weit seitlich versetzt von der Hauptachse A befinden.

In an sich bekannter Weise kann bei dem Radarsensor 20 in einem Erfassungsbetriebsmodus eine Abstandserfassung und/oder eine Bewegungserfassung für im Erfassungsbereich befindliche Objekte vorgesehen sein.

Für die Abstandserfassung kann durch die Auswertung des Signals RX dessen Laufzeit vom Radarsensor 20 zum Objekt und wieder zurück zum Radarsensor 20 ermittelt und somit der Abstand des Objekts vom Radarsensor 20 ermittelt werden.

Für die Bewegungserfassung kann durch die Auswertung der empfangenen Radarstrahlung (Radarsignal) RX deren Frequenzverschiebung (Dopplerverschiebung) bezüglich der ausgesendeten Radarstrahlung (Radarsignal) TX und daraus die Bewegungsgeschwindigkeit des Objekts ermittelt werden.

Bei dem Beispiel von Fig. 1 ist die Antenneneinrichtung 28 von einer (einzigen) Antenne gebildet, die im Betrieb des Radarsensors 20 sowohl zum Senden als auch Empfangen eingesetzt wird (monostatische Antennenkonfiguration).

Fig. 2 zeigt ein Beispiel eines Radarsensors, bei dem abweichend davon eine Antenneneinrichtung 28, 32 aufweisend separate Antennen zum Senden und Empfangen vorgesehen sind, hier eine Sendeantenne 28 und eine Empfangsantenne 32 (bistatische Antennenkonfiguration).

Fig. 3 zeigt den Aufbau des Radarsensors 20 von Fig. 2, aufweisend einen spannungsgesteuerten Oszillator (VCO) 22 zur Erzeugung eines mittels eines Steuersignals c1 in der Frequenz variierbaren Hochfrequenzsignals, welches mittels einer Verzweigungseinrichtung 24 in zwei kohärente Signale TX und LO aufgeteilt wird. Das Signals TX dient als ein Sendesignal des Radarsensors 20 und kann über eine mittels eines Steuersignals c2 ansteuerbare Schalteinrichtung 26 der Sendeantenne 28 zum Senden des Radarsignals TX zugeführt werden. Das Signal LO dient als Lokalsignal des Radarsensors 20 und wird einem ersten Eingang eines Mischers 30 zugeführt. Das mittels der Empfangsantenne 32 empfangene Radarsignal RX wird über einen mittels eines Steuersignals c3 ansteuerbaren Verstärker 34 als ein Empfangssignal RX einem zweiten Eingang des Mischers 30 zugeführt. An einem Ausgang des Mischers 30 wird als resultierendes Signal ein Zwischenfrequenzsignal IF ausgegeben.

Abweichend von dem in Fig. 3 gezeigten Beispiel eines VCO zur Frequenzerzeugung im Radarsensor 20 könnte hierfür auch eine andere Bauform eines HF-Signalerzeugers vorgesehen sein.

Fig. 4 zeigt eine Signalverarbeitungseinrichtung 40, welcher an einem Eingang das Zwischenfrequenzsignal IF zugeführt wird und welche an einem Ausgang eine digitale Repräsentation des Signals IF in Form eines digitalen Datensignals d ausgibt. Im dargestellten Ausführungsbeispiel umfasst die Signalverarbeitungseinrichtung 40 ein Bandpassfilter 42 und einen Analog/Digital-Wandler 44, um das Zwischenfrequenzsignal IF einer Bandpassfilterung zu unterziehen und das so gefilterte Signal in analog/digital-gewandelter Form als das Datensignal d auszugeben.

Wie in dem Beispiel von Fig. 2 gezeigt, wird das basierend auf dem Zwischenfrequenzsignal IF des Radarsensors 20 von der Signalverarbeitungseinrichtung 40 erzeugte Datensignal d der Steuereinrichtung 50 zugeführt.

Abweichend von den in den Fig. 1 und 2 gezeigten Beispielen könnte das Radarsystem auch mehrere Radarsensoren der hier beschriebenen Art aufweisen, wobei dann für jeden der mehreren Radarsensoren ein jeweiliges Datensignal einer für mehrere oder sämtliche dieser Radarsensoren gemeinsam genutzten Steuereinrichtung zugeführt werden kann.

Zurückkommend auf das Beispiel von Fig. 2 ist die Steuereinrichtung 50 als eine programmgesteuerte elektronische Steuereinrichtung implementiert, um den Radarsensor 20 zu betreiben (durch Erzeugung der entsprechenden Steuersignale c1, c2 und c3), und um im Betrieb des betreffenden Radarsystems auch die Auswertung des Datensignals d zum Zwecke der Objektdetektion durchzuführen.

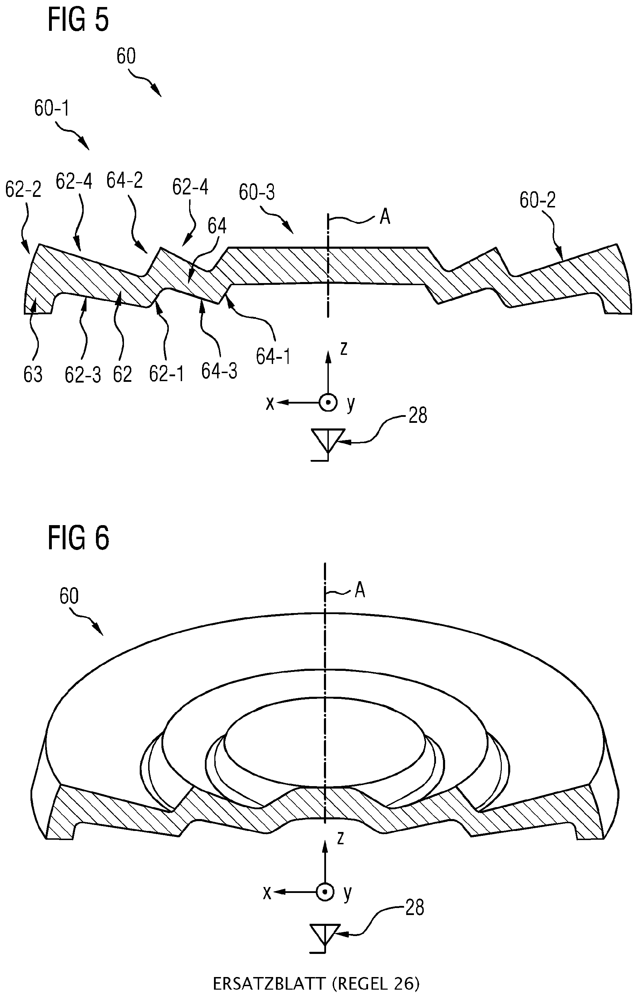

Fig. 5 zeigt ein einstückig aus Kunststoffmaterial gebildetes radaroptisches Element 60 gemäß eines Ausführungsbeispiels in einer Axialschnittansicht, sowie eine Antenneneinrichtung 28 eines zugeordneten Radarsensors (z. B. in Fig. 1 oder Fig. 2 gezeigter Radarsensor). Die Schnittebene von Fig. 5 wird durch die Hauptrichtung z des Radarsensors und die Azimuthrichtung x aufgespannt.

Wie aus Fig. 5 ersichtlich, weist das radaroptische Element 60 in dieser Schnittebene betrachtet beiderseits der Hauptachse A befindliche Schnittflächenabschnitte 60-1 (in Fig. 5 links) und 60-2 (in Fig. 5 rechts) auf. Die Schnittflächenabschnitte 60-1 und 60-2 sind über einen zentralen (von der Hauptachse A durchsetzten) Schnittflächenabschnitt 60-3 miteinander verbunden.

Im dargestellten Beispiel besitzt das radaroptische Element 60 eine Formgestaltung, bei welcher die beiderseits der Hauptachse A befindlichen Schnittflächenabschnitte 60-1, 60-2 bezüglich der Hauptachse A symmetrisch zueinander sind. In der dargestellten Azimuthrichtung x betrachtet ergibt sich damit eine symmetrische Strahlaufweitung der Radarstrahlung TX, RX. Im Folgenden wird lediglich auf die Gestaltung des Schnittflächenabschnitts 60-1 (in Fig. 5 links) eingegangen. Für den Schnittflächenabschnitt 60-2 (in Fig. 5 rechts) gilt entsprechendes.

Wie es weiter aus Fig. 5 ersichtlich ist, weist der Schnittflächenabschnitt 60-1 zwei von einem Zentrum der Antenneneinrichtung 28 aus betrachtet in verschiedenen Elevationsrichtungen und mit verschiedenen Abständen zur Antenneneinrichtung 28 gestaffelt aneinandergereihte Segmente 62 und 64 auf, wobei diese (im Hinblick auf die im Beispiel einstückige Ausbildung des radaroptischen Elements 60 nur "gedachten") Segmente 62 und 64 jeweils aufweisen:
- einen ersten Segmentrand 62-1 bzw. 64-1 auf einer der Antenneneinrichtung 28 zugewandten Innenseite des radaroptischen Elements 60, der im Wesentlichen orthogonal zu einer von der Antenneneinrichtung 28 zum ersten Segmentrand 62-1 bzw. 64-1 verlaufenden Verbindungslinie verläuft,
- einen zweiten Segmentrand 62-2 bzw. 64-2 auf einer der Antenneneinrichtung 28 abgewandten Außenseite des radaroptischen Elements 60, der im Wesentlichen orthogonal zu einer von der Antenneneinrichtung 28 zum zweiten Segmentrand 62-2 bzw. 64-2 verlaufenden Verbindungslinie verläuft,
- einen dritten Segmentrand 62-3 bzw. 64-3 auf der Innenseite des radaroptischen Elements 60, der im Wesentlichen parallel zu einer von der Antenneneinrichtung 28 zum dritten Segmentrand 62-3 bzw. 64-3 verlaufenden Verbindungslinie verläuft, und
- einen vierten Segmentrand 62-4 bzw. 64-4 auf der Außenseite des radaroptischen Elements 60, der im Wesentlichen parallel zu einer von der Antenneneinrichtung 28 zum vierten Segmentrand 62-4 bzw. 64-4 verlaufenden Verbindungslinie verläuft.

Im Falle einer Definition des Elevationswinkels von 0° für jede Azimuthrichtung (wie z. B. x und y) und 90° für die Hauptrichtung z sind im dargestellten Beispiel die Segmente 62 und 64 von der Antenneneinrichtung 28 aus betrachtet in Elevationsrichtungen angeordnet, denen Elevationswinkel von etwa 25° (Segment 62) bzw. etwa 35° (Segment 64) entsprechen. Die Segmente 62, 64 beanspruchen hierbei insgesamt einen Elevationswinkelbereich von etwa 20° (beginnend bei etwa 20° und endend bei etwa 40°).

Ganz allgemein ist es im Rahmen der Erfindung bevorzugt, wenn die Segmente von der Antenneneinrichtung 28 (bzw. einem Zentrum derselben) aus betrachtet einen Elevationswinkelbereich von mindestens 20°, insbesondere mindestens 30° beanspruchen. Andererseits ist in den meisten Fällen ein (von den Segmenten beanspruchter) Elevationswinkelbereich von maximal 50°, insbesondere maximal 40° vorteilhaft.

Der vorgenannte Elevationswinkelbereich beginnt im Rahmen der Erfindung bevorzugt bei einem Elevationswinkel im Bereich von 5° bis 25°, und kann z. B. bei einem Elevationswinkel im Bereich von 30° bis 60° enden.

Im Rahmen der Erfindung ist es bevorzugt, wenn die Staffelung der aneinandergereihten Segmente derart gestaltet ist, dass der Abstand zwischen der Antenneneinrichtung und dem ersten Segmentrand eines Segments, wie auch der Abstand zwischen der Antenneneinrichtung und dem zweiten Segmentrand eines Segments, umso größer ist, je kleiner der Elevationswinkel ist, unter dem das betreffende Segment von der Antenneneinrichtung aus betrachtet angeordnet ist. Für das Beispiel von Fig. 5 und die in diesem Beispiel gestaffelt aneinandergereihten Segmente 62 und 64 bedeutet dies, dass der Segmentrand 62-1 weiter von der Antenneneinrichtung 28 entfernt ist als der Segmentrand 64-1, und dass der Segmentrand 62-2 weiter von der Antenneneinrichtung 28 entfernt ist als der Segmentrand 64-2. Im Beispiel von Fig. 5 weist der Schnittflächenabschnitt 60-1 außerdem noch einen an das Segment 62 angrenzenden und somit den Schnittflächenabschnitt 60-1 zu kleinen Elevationswinkeln hin abschließenden "Abschlussbereich" 63 auf, dessen der Antenneneinrichtung 28 zugewandter Innenrand weiter von der Antenneneinrichtung 28 entfernt ist als der Segmentrand 62-1, dessen der Antenneneinrichtung 28 abgewandter Außenrand jedoch bündig zum Segmentrand 62-2 verläuft.

Beispielsweise im Hinblick auf eine zumeist bevorzugte einstückige Ausbildung des radaroptischen Elements (bzw. zumindest dessen die Aneinanderreihung der Segmente beinhaltenden Teils) ist es ferner vorteilhaft, wenn in der Schnittfläche betrachtet in der Aneinanderreihung einander benachbarte Segmente trotz Unterschiedlichkeit der Abstände von deren ersten und zweiten Segmenträndern von der Antenneneinrichtung stets ein Überlappungsbereich verbleibt (an dem die einander benachbarten Segmente z. B. miteinander verbunden bzw. einstückig ineinander übergehen können). Im Beispiel von Fig. 5 bedeutet dies, dass der Segmentrand 62-1 weniger weit von der Antenneneinrichtung 28 entfernt ist als der Segmentrand 64-2.

Im dargestellten Beispiel von Fig. 5 verläuft der erste Segmentrand 62-1 bzw. 64-1 der jeweiligen Segmente 62 und 64 geradlinig und besitzt hierbei eine Normalenrichtung, die bezüglich einer von der Antenneneinrichtung 28 zur Mitte des Segmentrandes verlaufenden Verbindungslinie mit einem kleinen Neigungswinkel im Bereich von 1 bis 5° derart geneigt verläuft, dass von der Antenneneinrichtung 28 gesendete und an dieser Stelle auftreffende Radarstrahlung TX in Richtung von der Hauptrichtung z weg gebrochen wird. Alternativ könnte der erste Segmentrand 62-1 bzw. 64-1 der jeweiligen Segmente 62 und 64 jedoch auch mit einer Normalenrichtung gestaltet sein, bei welcher der genannte Neigungswinkel (z. B. im Bereich von 1 bis 5°) anders orientiert derart vorgesehen ist, dass die an der betreffenden Stelle des ersten Segmentrandes 62-1 bzw. 64-1 auftreffende Radarstrahlung TX in Richtung zunächst (und z. B. relativ geringfügig) zur Hauptrichtung z hin gebrochen wird, um sodann jedoch den vierten Segmentrand 62-4 bzw. 64-4 zu erreichen und dort (relativ stark) in Richtung von der Hauptrichtung weg totalreflektiert zu werden.

Außerdem ist im Beispiel von Fig. 5 vorgesehen, dass der zweite Segmentrand 62-2 bzw. 64-2 geradlinig verläuft und hierbei eine Verlaufsrichtung derart besitzt, dass von der Antenneneinrichtung 28 gesendete, über eine mittige Stelle des ersten Segmentrandes 62-1 bzw. 64-1 in das betreffende Segment 62 bzw. 64 eingetretene und durch dieses Segment hindurch den betreffenden zweiten Segmentrand 62-2 bzw. 64-2 erreichende Radarstrahlung TX noch weiter in Richtung von der Hauptrichtung z weg gebrochen wird.

Von der Antenneneinrichtung 28 gesendete, über eine außermittige Stelle des ersten Segmentrandes 62-1 bzw. 64-1 in das betreffende Segment 62 bzw. 64 eingetretene und durch dieses Segment hindurch den zur Außenseite des radaroptischen Elements 60 freiligenden Abschnitt des betreffenden vierten Segmentrandes 62-4 bzw. 64-4 erreichende Radarstrahlung TX wird in Richtung von der Hauptrichtung z weg totalreflektiert.

Fig. 6 zeigt ein einstückig aus Kunststoffmaterial gebildetes radaroptisches Element 60 gemäß eines weiteren Ausführungsbeispiels in einer teilweise geschnittenen Ansicht, sowie eine Antenneneinrichtung 28 eines zugeordneten Radarsensors (vgl. z. B. Beispiele gemäß der Fig. 1 bis 4). Die Schnittebene von Fig. 6 wird durch die Hauptrichtung z und die Azimuthrichtung x aufgespannt.

Wie aus Fig. 6 ersichtlich, ist das radaroptische Element 60 in diesem Beispiel rotationssymmetrisch bezüglich der Hauptachse A ausgebildet, und zwar in diesem Beispiel mit einer Axialschnittfläche wie bereits mit Bezug auf Fig. 5 beschrieben.

Insofern zeigt Fig. 6 wieder das Beispiel von Fig. 5 im Falle einer um die Hauptachse A rotationssymmetrischen Formgestaltung des radaroptischen Elements 60 (Bei dem Beispiel von Fig. 5 sind jedoch auch nicht-rotationssymmetrische Formgestaltungen möglich).

In beiden Ausführungsbeispielen (Fig. 5 und 6) ist vorgesehen, dass das radaroptische Element 60 scheibenartig ausgebildet ist, z. B. mit einer in Richtung der Hauptrichtung z gemessenen Ausdehnung im Bereich des etwa 0,1-fachen bis 0,2-fachen einer maximalen in Richtung orthogonal zur Hauptrichtung z gemessenen Ausdehnung.

In beiden Ausführungsbeispielen (Fig. 5 und 6) ist vorgesehen, dass das radaroptische Element 60 in einem zentralen Bereich (nahe der Hauptachse A) einen plattenförmigen Abschnitt aufweist, der eine einheitliche Dicke besitzt und somit nicht zur Strahlaufweitung beiträgt (vgl. z. B. in Fig. 5 den mittleren Schnittflächenabschnitt 60-3). Insofern könnte abweichend von diesen Ausführungsbeispielen ein solcher zentraler Bereich auch weggelassen werden, so dass sich eine z. B. kreisringförmige Form des radaroptischen Elements ergibt.

In beiden Ausführungsbeispielen (Fig. 5 und 6) besitzt das radaroptische Element 60 aufgrund dessen Ausgestaltung mit den beschriebenen Segmenten (in der Schnittansicht bzw. Schnittebene) "korrugierte" Innen- und Außenseiten. Falls dies unerwünscht ist, und z. B. aus ästhetischen Gründen in Verwendungssituation (z. B. an einem Fahrzeug) eine eher "glatte" Außenfläche realisiert sein soll, so kommt hierfür z. B. in Betracht, das radaroptische Element auf seiner Außenseite mit einer entsprechenden Abschlusslage zu versehen bzw. auszubilden.

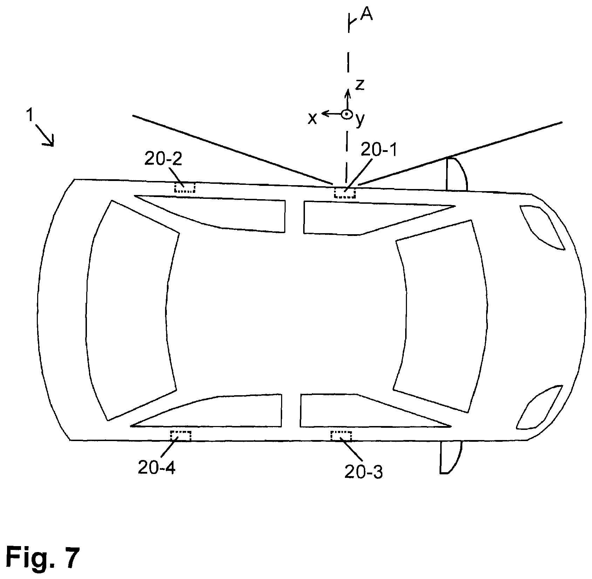

Fig. 7 zeigt ein Fahrzeug 1 (hier z. B. PKW), das mit einem Radarsystem der hier beschriebenen Art ausgestattet ist. Im Beispiel von Fig. 7 sind vier Radarsensoren 20-1 bis 20-4 eingezeichnet, die beispielsweise jeweils wie der mit Bezug auf die Fig. 2 und 3 bereits beschriebene Radarsensor 20 aufgebaut sein können.

Die Radarsensoren 20-1 bis 20-4 sind jeweils an der Außenseite einer linken Vordertür, einer linken Hintertür, einer rechten Vordertür bzw. einer rechten Hintertür angeordnet und fungieren im Betrieb des Radarsystems als Sensoren zur Gewährleistung der Sicherheit bei einem automatischen Öffnen der jeweiligen Fahrzeugtür.

Das Radarsystem wird in diesem Beispiel bei dem Fahrzeug 1 insbesondere z. B. dazu verwendet, bei einer automatischen Öffnung jeder der vier Türen sicherzustellen, dass sich kein Hindernis vor der jeweiligen Tür befindet. Alternativ oder zusätzlich kann basierend auf dem Ergebnis der Objektdetektion bei jedem Öffnen einer der Türen eine individuelle Begrenzung des Öffnungsweges der betreffenden Tür vorgesehen sein.

Im dargestellten Beispiel besitzen die raumwinkelabhängigen Antennencharakteristiken sämtlicher Sende- und Empfangsantennen der Radarsensoren 20-1 bis 20-4 jeweils ein globales Maximum der Abstrahlung bzw. ein globales Maximum der Empfangssensitivität ("Hauptkeule") in einer Richtung orthogonal zu einer jeweiligen (lokalen) Oberfläche der Tür, um mittels der linken Radarsensoren 20-1 und 20-2 Objekte links von den zugehörigen Türen und mittels der rechten Radarsensoren 20-3 und 20-4 Objekte rechts von den zugehörigen Türen zu erfassen.

Darüber hinaus zeigen die Antennencharakteristiken der Radarsensoren 20-1 bis 20-4 jeweils ein Maximum der Abstrahlung und/oder ein Maximum der Empfangssensitivität ("Nebenkeulen") in Azimuthrichtung x betrachtet in einem Winkelabstand zur "Hauptkeule". In den Elevationsrichtungen dieser Nebenkeulen jedes Radarsensors können sich z. B. wie mit Bezug auf die Fig. 5 und 6 beschriebene Segmente (62, 64) eines betreffenden radaroptischen Elements (60) befinden. Somit unterliegt insbesondere die in den Richtungen dieser Nebenkeulen gesendete bzw. empfangene Radarsstrahlung (TX, RX) der durch das radaroptische Element bewirkten Strahlaufweitung, so dass sich vorteilhaft der Raumwinkelbereich jedes der Radarsensoren 20-1 bis 20-4 vergrößert, innerhalb dem Objekte erfasst und somit detektiert werden können. Alternativ kann im Rahmen der Erfindung jedoch auch vorgesehen sein, mittels des radaroptischen Elements insbesondere die Strahlungsanteile einer Hauptkeule aufzuweiten.

Im Falle einer Verwendung für eine Objektdetektion in der Umgebung eines Fahrzeuges, wie z. B. gemäß des Beispiels von Fig. 7 vor Seitentüren eines Fahrzeuges, kann vorteilhaft z. B. eine nicht oder allenfalls geringfügig exponierte (von der Fahrzeugaußenhaut hervorstehende) Anordnung der Komponenten des Radarsystems bewerkstelligt werden. So ist im Beispiel von Fig. 7 beispielsweise jeder Radarsensor mitsamt Antenneneinrichtung vertieft unterhalb der Außenhaut angeordnet, wohingegen das radaroptische Element im Bereich der Außenhaut (z. B. bündig zur Außenhaut) angeordnet ist.

Falls abweichend von der Darstellung im Beispiel von Fig. 7 eine Fahrzeugkomponente wie z. B. der am Fahrzeug 1 angeordnete Außenspiegel bzw. Seitenspiegel (in Fig. 7 ohne Bezugszahl) innerhalb desjenigen Raumwinkelbereiches (Erfassungsbereich) liegen würde, in den hinein der betreffende Radarsensor (hier: 20-1) Radarstrahlung TX sendet und aus dem heraus an Objekten reflektierte Radarstrahlung RX von diesem Radarsensor empfangen wird, so könnte z. B. vorgesehen sein, dass dieser Seitenspiegel (und/oder eine andere betreffende Fahrzeugkomponente) aus dem Erfassungsbereich "ausgeblendet" wird. Zu diesem Zweck könnte z. B. vorgesehen sein, dass das diesem Radarsensor zugeordnete radaroptische Element pro auszublendendem Objekt (wie hier Seitenspiegel) einen Teilbereich (z. B. carbonisierter Kunststoff) aufweist, sei es z. B. im Volumen oder z. B. an der Oberfläche (z. B. als Beschichtung), welcher die gesendete Radarstrahlung TX an dieser Stelle stark absorbiert (z. B. mindestens 90%, insbesondere mindestens 95% der an dieser Stelle eintreffenden Strahlungsleistung).

Alternativ zu einer Anordnung des Radarsensors im Bereich einer Tür(fläche) kann als Anbau- oder Einbaupositionen am Fahrzeug 1 z. B. auch ein Schwellerbereich, eine A-, B- oder C-Säule, eine Dachlinie, oder ein Seitenspiegel vorgesehen sein.

## Patentansprüche

1. Radarsystem (10), aufweisend
- einen Radarsensor (20) mit einer Antenneneinrichtung (28, 32) zum Senden von Radarstrahlung (TX) und Empfangen von an einem Objekt reflektierter Radarstrahlung (RX) in einem Raumwinkelbereich um eine in einer Hauptrichtung (z) verlaufende Hauptachse (A) der Antenneneinrichtung (28, 32),
- eine Steuereinrichtung (50), die dazu ausgebildet ist, den Radarsensor (20) zu betreiben und die empfangene Radarstrahlung (RX) für eine Detektion von Objekten auszuwerten, und
- ein in der Hauptrichtung (z) betrachtet vor der Antenneneinrichtung (28, 32) angeordnetes radaroptisches Element (60), um beim Durchgang der Radarstrahlung (TX, RX) durch das radaroptische Element (60) eine Strahlformung zu bewirken,
wobei dass das radaroptische Element (60) dazu ausgebildet ist, beim Durchgang der Radarstrahlung (TX, RX) durch das radaroptische Element (60) eine Strahlaufweitung in wenigstens einer zur Hauptrichtung (z) orthogonalen Azimuthrichtung (x) zu bewirken, und
wobei das radaroptische Element (60) in einer von der Hauptrichtung (z) und der Azimuthrichtung (x) aufgespannten Schnittebene betrachtet beiderseits der Hauptachse (A) befindliche Schnittflächenabschnitte (60-1, 60-2) aufweist und wenigstens einer (60-1) der beiden Schnittflächenabschnitte (60-1, 60-2) mehrere von der Antenneneinrichtung (28, 32) aus betrachtet in verschiedenen Elevationsrichtungen und mit verschiedenen Abständen zur Antenneneinrichtung (28, 32) gestaffelt aneinandergereihte Segmente (62, 64) aufweist, welche jeweils aufweisen:
- einen ersten Segmentrand (62-1, 64-1) auf einer der Antenneneinrichtung (28, 32) zugewandten Innenseite des radaroptischen Elements (60), der im Wesentlichen orthogonal zu einer von der Antenneneinrichtung (28, 32) zum ersten Segmentrand (62-1, 64-1) verlaufenden Verbindungslinie verläuft,
- einen zweiten Segmentrand (62-2, 64-2) auf einer der Antenneneinrichtung (28, 32) abgewandten Außenseite des radaroptischen Elements (60), der im Wesentlichen orthogonal zu einer von der Antenneneinrichtung (28, 32) zum zweiten Segmentrand (62-2, 64-2) verlaufenden Verbindungslinie verläuft,
- einen dritten Segmentrand (62-3, 64-3) auf der Innenseite des radaroptischen Elements (60), der im Wesentlichen parallel zu einer von der Antenneneinrichtung (28, 32) zum dritten Segmentrand (62-3, 64-3) verlaufenden Verbindungslinie verläuft,
- einen vierten Segmentrand (62-4, 64-4) auf der Außenseite des radaroptischen Elements (60), der im Wesentlichen parallel zu einer von der Antenneneinrichtung (28, 32) zum vierten Segmentrand (62-4, 64-4) verlaufenden Verbindungslinie verläuft.

2. Radarsystem (10) nach Anspruch 1, wobei der erste Segmentrand (62-1, 64-1) zumindest an einer Stelle eine Normalenrichtung besitzt, die bezüglich einer von der Antenneneinrichtung (28, 32) zu dieser Stelle verlaufenden Verbindungslinie mit einem Neigungswinkel im Bereich von 1 bis 20° derart geneigt verläuft, dass von der Antenneneinrichtung (28, 32) gesendete und an dieser Stelle auftreffende Radarstrahlung (TX) in Richtung von der Hauptrichtung (z) weg gebrochen wird.

3. Radarsystem (10) nach Anspruch 1 oder 2, wobei der vierte Segmentrand (62-4, 64-4) zumindest an einer Stelle eine Verlaufsrichtung besitzt, durch welche von der Antenneneinrichtung (28, 32) gesendete, über den ersten Segmentrand (62-1, 64-1) in das Segment (62, 64) eingetretene, und diese Stelle erreichende Radarstrahlung (TX) in Richtung von der Hauptrichtung (z) weg totalreflektiert wird.

4. Radarsystem (10) nach einem der Ansprüche 1 bis 3, wobei die beiderseits der Hauptachse (A) befindlichen Schnittflächenabschnitte (60-1, 60-2) des radaroptischen Elements (60) bezüglich der Hauptrichtung (z) symmetrisch zueinander sind.

5. Radarsystem (10) nach einem der vorangehenden Ansprüche, wobei das radaroptische Element (60) einstückig ausgebildet ist.

6. Radarsystem (10) nach einem der vorangehenden Ansprüche, wobei das radaroptische Element (60) rotationssymmetrisch bezüglich der Hauptachse (A) ausgebildet ist.

7. Radarsystem (10) nach einem der vorangehenden Ansprüche, wobei das radaroptische Element (60) scheibenartig ausgebildet ist, wobei eine in Richtung der Hauptrichtung (z) gemessene Ausdehnung des radaroptischen Elements (60) im Bereich des 0,05-fachen bis 0,25-fachen einer maximalen in Richtung orthogonal zur Hauptrichtung (z) gemessenen Ausdehnung des radaroptischen Elements (60) liegt.

8. Radarsystem (10) nach einem der vorangehenden Ansprüche, wobei das radaroptische Element (60) über dessen Volumen betrachtet uneinheitliche radaroptische Eigenschaften, wie z. B. uneinheitlichen Brechungsindex und/oder Transmission und/oder Absorption und/oder Reflexion, aufweist und/oder entsprechende Teilbereiche aufweist.

9. Verwendung eines Radarsystems (10) nach einem der vorangehenden Ansprüche, angeordnet an einem Fahrzeug (1), für eine Detektion von Objekten in einer Umgebung des Fahrzeuges (1).

10. Fahrzeug, ausgestattet mit einem Radarsystem (10) nach einem der Ansprüche 1 bis 8.

## Claims

1. Radar system (10), comprising
- a radar sensor (20) with an antenna device (28, 32) for transmitting radar radiation (TX) and receiving radar radiation (RX) reflected at an object in a solid-angle region around a main axis (A) of the antenna device (28, 32) extending in a main direction (z),
- a control device (50), which is designed to operate the radar sensor (20) and evaluate the received radar radiation (RX) for the detection of objects, and
- a radar-optical element (60) arranged upstream of the antenna device (28, 32) as viewed in the main direction (z) in order to effect beam shaping as the radar radiation (TX, RX) passes through the radar-optical element (60), wherein the radar-optical element (60) is designed to effect beam expansion in at least one azimuth direction (x) orthogonal to the main direction (z) when the radar radiation (TX, RX) passes through the radar-optical element (60), and
wherein the radar-optical element (60) has sectional surface sections (60-1, 60-2) located on both sides of the main axis (A) as viewed in a sectional plane defined by the main direction (z) and the azimuth direction (x) and at least one (60-1) of the two sectional surface sections (60-1, 60-2) has a plurality of segments (62, 64) which are arranged staggered one next to the other in different elevation directions and with different distances from the antenna device (28, 32) as viewed from the antenna device (28, 32), each segment having:
- a first segment edge (62-1, 64-1) on an inner side of the radar-optical element (60) facing the antenna device (28, 32), which edge extends substantially orthogonal to a connecting line extending from the antenna device (28, 32) to the first segment edge (62-1, 64-1),
- a second segment edge (62-2, 64-2) on an outer side of the radar-optical element (60) facing away from the antenna device (28, 32), which edge extends substantially orthogonal to a connecting line extending from the antenna device (28, 32) to the second segment edge (62-2, 64-2),
- a third segment edge (62-3, 64-3) on the inner side of the radar-optical element (60), which extends substantially parallel to a connecting line extending from the antenna device (28, 32) to the third segment edge (62-3, 64-3),
- a fourth segment edge (62-4, 64-4) on the outer side of the radar-optical element (60), which extends substantially parallel to a connecting line extending from the antenna device (28, 32) to the fourth segment edge (62-4, 64-4).

2. Radar system (10) according to Claim 1, wherein the first segment edge (62-1, 64-1) has at least at one point a normal direction which is inclined with respect to a connecting line extending from the antenna device (28, 32) to this point at an inclination angle in the range of 1 to 20° in such a way that radar radiation (TX) that is transmitted by the antenna device (28, 32) and is incident at this point is refracted in the direction away from the main direction (z).

3. Radar system (10) according to Claim 1 or 2, wherein the fourth segment edge (62-4, 64-4) has at least at one point a direction of extent by which radar radiation (TX) that is transmitted by the antenna device (28, 32), has entered the segment (62, 64) via the first segment edge (62-1, 64-1) and reaches this point is reflected by total internal reflection in the direction away from the main direction (z).

4. Radar system (10) according to any of Claims 1 to 3, wherein the sectional surface sections (60-1, 60-2) of the radar-optical element (60) located on both sides of the main axis (A) are symmetric to each other with respect to the main direction (z).

5. Radar system (10) according to any of the preceding claims, wherein the radar-optical element (60) is formed in one piece.

6. Radar system (10) according to any of the preceding claims, wherein the radar-optical element (60) is rotationally symmetric with respect to the main axis (A).

7. Radar system (10) according to any of the preceding claims, wherein the radar-optical element (60) is designed like a disc, wherein an expansion of the radar-optical element (60) measured in the direction of the main direction (z) is in the range of 0.05 times to 0.25 times the maximum expansion of the radar-optical element (60) measured in the direction orthogonal to the main direction (z).

8. Radar system (10) according to any of the preceding claims, wherein the radar-optical element (60) has, viewed over its volume, non-uniform radar-optical properties, such as a non-uniform refractive index and/or transmission and/or absorption and/or reflection, and/or has corresponding partial regions.

9. Use of a radar system (10) according to any of the preceding claims, arranged on a vehicle (1), for the detection of objects in an environment of the vehicle (1).

10. Vehicle equipped with a radar system (10) according to any of Claims 1 to 8.

## Revendications

1. Système radar (10) comprenant
- un capteur radar (20) équipé d'un dispositif d'antenne (28, 32) destiné à émettre un rayonnement radar (TX) et à recevoir un rayonnement radar (RX) réfléchi par un objet dans une zone angulaire autour d'un axe principal (A) du dispositif d'antenne (28, 32) s'étendant dans une direction principale (z),
- un dispositif de commande (50) qui est conçu pour faire fonctionner le capteur radar (20) et pour évaluer le rayonnement radar reçu (RX) afin de détecter des objets, et
- un élément optique radar (60) agencé devant le dispositif d'antenne (28, 32) dans la direction principale (z) afin de provoquer une formation de rayonnement lors du passage du rayonnement radar (TX, RX) à travers l'élément optique radar (60),
l'élément optique radar (60) étant conçu pour provoquer, lors du passage du rayonnement radar (TX, RX) à travers l'élément optique radar (60), une expansion du rayonnement dans au moins une direction azimutale (x) orthogonale à la direction principale (z), et
l'élément optique radar (60) présentant, vu dans un plan de coupe défini par la direction principale (z) et la direction azimutale (x), des sections de surface de coupe (60-1, 60-2) situées de part et d'autre de l'axe principal (A), et au moins une (60-1) des deux sections de surface de coupe (60-1, 60-2) comporte plusieurs segments (62, 64) qui, vus depuis le dispositif d'antenne (28, 32), sont agencés en quinconce dans différentes directions d'élévation et à différentes distances du dispositif d'antenne (28, 32) et qui comportent chacun :
- un premier bord de segment (62-1, 64-1) sur une face intérieure de l'élément optique radar (60) tournée vers le dispositif d'antenne (28, 32), qui s'étend sensiblement orthogonalement à une ligne de jonction s'étendant entre le dispositif d'antenne (28, 32) et le premier bord de segment (62-1, 64-1),
- un deuxième bord de segment (62-2, 64-2) sur une face extérieure de l'élément optique radar (60) opposée au dispositif d'antenne (28, 32), qui s'étend sensiblement orthogonalement à une ligne reliant le dispositif d'antenne (28, 32) au deuxième bord de segment (62-2, 64-2),
- un troisième bord de segment (62-3, 64-3) sur la face intérieure de l'élément optique radar (60), qui s'étend sensiblement parallèlement à une ligne de jonction s'étendant entre le dispositif d'antenne (28, 32) et le troisième bord de segment (62-3, 64-3),
- un quatrième bord de segment (62-4, 64-4) sur le côté extérieur de l'élément optique radar (60), qui s'étend sensiblement parallèlement à une ligne de jonction allant du dispositif d'antenne (28, 32) au quatrième bord de segment (62-4, 64-4).

2. Système radar (10) selon la revendication 1, dans lequel le premier bord de segment (62-1, 64-1) présente, au moins en un point, une direction normale qui, par rapport à une ligne de jonction s'étendant depuis le dispositif d'antenne (28, 32) jusqu'à ce point, est inclinée selon un angle compris entre 1 et 20° de telle sorte que le rayonnement radar (TX) émis par le dispositif d'antenne (28, 32) et arrivant à cet endroit est dévié dans une direction s'éloignant de la direction principale (z).

3. Système radar (10) selon la revendication 1 ou la revendication 2, dans lequel le quatrième bord de segment (62-4, 64-4) présente, au moins en un point, une direction d'extension par laquelle le rayonnement radar (TX) émis par le dispositif d'antenne (28, 32), entré dans le segment (62, 64) par le premier bord de segment (62-1, 64-1) et atteignant cet emplacement, est totalement réfléchi dans une direction s'éloignant de la direction principale (z).

4. Système radar (10) selon l'une des revendications 1 à 3, dans lequel les sections de surface d'intersection (60-1, 60-2) de l'élément optique radar (60) situées de part et d'autre de l'axe principal (A) sont symétriques l'une par rapport à l'autre, par rapport à la direction principale (z).

5. Système radar (10) selon l'une des revendications précédentes, dans lequel l'élément optique radar (60) est réalisé d'un seul tenant.

6. Système radar (10) selon l'une des revendications précédentes, dans lequel l'élément optique radar (60) est réalisé avec une symétrie de rotation par rapport à l'axe principal (A).

7. Système radar (10) selon l'une des revendications précédentes, dans lequel l'élément optique radar (60) est réalisé en forme de disque, une extension de l'élément radar optique (60) mesurée dans la direction principale (z) étant comprise entre 0,05 et 0,25 fois une extension maximale de l'élément radar optique (60) mesurée dans une direction orthogonale à la direction principale (z).

8. Système radar (10) selon l'une des revendications précédentes, dans lequel l'élément radar optique (60) présente, sur l'ensemble de son volume, des propriétés radar optiques non uniformes, telles qu'un indice de réfraction et/ou une transmission et/ou une absorption et/ou une réflexion non uniformes, et/ou comporte des zones partielles correspondantes.

9. Utilisation d'un système radar (10) selon l'une des revendications précédentes, monté sur un véhicule (1), pour détecter des objets dans l'environnement du véhicule (1).

10. Véhicule équipé d'un système radar (10) selon l'une des revendications 1 à 8.
